Europäisches Patentamt

European Patent Office

Office européen des brevets

(11) Veröffentlichungsnummer: **0 217 739**
**A2**

(12) **EUROPÄISCHE PATENTANMELDUNG**

(21) Anmeldenummer: **86810293.0**

(51) Int. Cl.4: **C 02 F 11/18**

(22) Anmeldetag: **07.07.86**

(30) Priorität: **03.10.85 CH 4266/85**

(43) Veröffentlichungstag der Anmeldung:
**08.04.87 Patentblatt 87/15**

(84) Benannte Vertragsstaaten:
**AT BE CH DE FR GB IT LI NL SE**

(71) Anmelder: **UTB Umwelttechnik Buchs AG**
**Rheinstrasse 14b**
**CH-9470 Buchs/SG (CH)**

(72) Erfinder: **Jungbauer, Othmar**
**Austrasse 88**
**A-6805 Feldkirch/Gisingen (AT)**

**Vocelka, Michael**
**Wiesenstrasse 18**
**CH-9470 Buchs/SG (CH)**

**Zwiefelhofer, Hans Peter**
**Platte 138**
**FL-9488 Schellenberg (LI)**

(74) Vertreter: **Riederer, Conrad A., Dr.**
**Bahnhofstrasse 10**
**CH-7310 Bad Ragaz (CH)**

(54) Verfahren und Vorrichtung zum Konditionieren und Hygienisieren von Klärschlamm.

(57) Die Temperatur des Klärschlamms in der Vorlage (25) wird durch Wärme aus dem Reaktor aufrecht erhalten. Zu diesem Zweck ist die Vorlage (25) im Reaktor (11) selbst untergebracht. Sie weist zwei Kammern (26, 27) auf, aus denen über die Ventile (33, 34) der Inhalt abwechslungsweise mittels der Pumpe (35) abgepumpt wird. Die Füllung der Kammern (26, 27) erfolgt ebenfalls abwechslungsweise über Ventile (30, 31). Die variablen Pumpen (13 und 35) arbeiten der anfallenden Klärschlammenge entsprechend kontinuierlich, wobei ein Durchflusswärmetauscher (17) eine Aufwärmung des frischen Klärschlamms durch den behandelten Klärschlamm nach dem Gegenstromprinzip ermöglicht. Der frische Klärschlamm wird mit Klärschlamm aus dem Reaktor (11) gemischt. Das relativ warme Gemisch wird durch den Injektor (11) geführt und belüftet. Der frische Klärschlamm findet so nach dem Eintritt in den Reaktor sofort die für die thermophilen Prozesse günstigen Bedingungen, nämlich eine ausreichende Wärme, einen hohen Gehalt an thermophilen Bakterien und an Luftsauerstoff.

**Beschreibung**

Verfahren und Vorrichtung zum Konditionieren und Hygienisieren von Klärschlamm

Die Erfindung betrifft ein Verfahren zum Konditionieren und Hygienisieren von Klärschlamm, bei welchem Verfahren der frische Klärschlamm zuerst durch Temperaturerhöhung in einem Reaktor hygienisiert und/oder hydrolysiert, dann in einer Vorlage weiter hygienisiert und entgast und schliesslich in einer oder mehreren Stufen in Faulschlamm umgewandelt wird.

In der Praxis hat sich ein Behandlungsverfahren für Klärschlamm bewährt, bei welchem der Klärschlamm zuerst durch Erwärmen auf eine Temperatur von > 60° C während ca. 24 Stunden hygienisiert und hydrolisiert wird. Das europäische Patent 0 053 777 sieht vor, dass die Erwärmung des Klärschlammes durch biologischen Abbau erfolgt, indem Luft in den Klärschlamm eingeleitet wird, wodurch die Tätigkeit der thermophilen Bakterien derart unterstützt wird, dass Temperaturen von etwa 70° C erreicht werden. Eine erhöhte Temperatur wird solange aufrecht erhalten, dass Enterobakteriaceen und Wurmeier abgetötet werden. Es wird aber nicht nur eine Hygiensierung sondern auch eine Hydrolyse des Klärschlamms erreicht, was den Vorteil hat, dass die nachfolgende Faulung dadurch erleichtert wird. Bevor der behandelte Klärschlamm in den Faulraum abgeführt wird, wird die abzuführende Charge in eine Vorlage abgelassen und dort etwa eine halbe Stunde belassen. Dadurch wird vermieden, dass mit dem behandelten Klärschlamm auch Spuren von unbehandeltem Klärschlamm abge führt werden, welche noch gefährliche Enterobakteriaceen, z.B. Salmonellen, enthalten. Die Verweilzeit von einer halben Stunde genügt, um noch restliche Enterobakteriaceen abzutöten. Gleichzeitig erfolgt eine weitgehende Entgasung des Klärschlamms. Die Ausbildung der Vorlage mit zwei Kammern ermöglicht es, abwechslungsweise die eine oder die andere Kammer zu entleeren und gleichzeitig dem Reaktor frischen Klärschlamm zuzuführen, ohne dass die Gefahr besteht, dass von diesem Klärschlamm Spuren in den behandelten Klärschlamm übergehen, der aus der Vorlage abgepumpt und einem Durchflusswärmetauscher zugeführt wird, durch welchen im Gegenstrom frischer Klärschlamm dem Reaktor zugeführt wird. Nachteilig beim beschriebenen Verfahren ist, dass die Vorlage gut isoliert sein muss, damit der darin sich befindliche Klärschlamm nicht zu stark abkühlt und keine genügende Hygienisierung erzielt wird. Die Isolation der Vorlage und der relativ langen Zuleitungen ist relativ teuer und vermag insbesondere bei strengen Wintern den Anforderungen kaum zu genügen. Es ist daher Aufgabe der vorliegenden Erfindung, ein Verfahren und eine Vorrichtung zu schaffen, bei welchem bzw. welcher Wärmeverluste und die daraus entstehenden Gefahren bei der Vorlage vermieden werden.

Gemäss der Erfindung wird dies dadurch erreicht, dass die Temperatur des Klärschlamms in der Vorlage durch Wärme aus dem Reaktor aufrecht erhalten wird. Dieses Verfahren erscheint vorerst in den meisten Fällen aus Kostengründen nicht praktikabel. Ein bevorzugtes Ausführungsbeispiel der Erfindung sieht daher vor, die Vorlage mit Reaktorklärschlamm zu umspülen. Dies wird gemäss der Erfindung dadurch realisiert, dass die Vorlage im Innern des Reaktors angeordnet ist. Dies hat nicht nur den Vorteil, dass Wärmeverluste vermieden werden, sondern ermöglicht es, das erfindungsgemässe Verfahren auf sehr einfache Weise durchzuführen. Des weiteren können die Zuleitungen kurz gehalten werden, was aus Wärmeökonomie-und Kostengründen vorteilhaft ist. Es sind auch in der Regel keine Pumpen notwendig, um den Klärschlamm in die Vorlage einzulassen. Bei der üblichen Viskosität des Klärschlammes ist der statische Druck im Reaktor ausreichend, um den Klärschlamm aus dem Reaktor in die Vorlage zu fördern.

Zweckmässigerweise wird der im Reaktor befindliche Klärschlamm durch eine Pumpe umgewälzt. Dabei ist es zweckmässig, wenn der durch die Pumpe geförderte Klärschlamm tangential in den Reaktor eingeführt wird und so den Reaktorinhalt in eine Drehbewegung um die Vorlage herum versetzt. Nach dem Ausgasen in der Vorlage kann der behandelte Klärschlamm aus der Vorlage und der Frischschlamm im Gegenstrom durch einen Durchflusswärmetauscher geführt werden. Durchflusswärmetauscher haben gegenüber statischen Wärmetauschern den Vorteil, dass sie weniger zu Verstopfung neigen.

Eine vorteilhafte Ausbildung des Verfahrens sieht vor, dass eine Vorlage mit mindestens zwei Kammern verwendet wird, und dass diese Kammern abwechslungsweise gefüllt und geleert werden. Dies ermöglicht eine kontinuierliche Operation, denn nach der Leerung der einen Kammer kann zur anderen Kammer umgeschaltet werden, um diese zu leeren, währenddem die vorher geleerte Kammer wieder mit Klärschlamm aus dem Reaktor gefüllt wird. Die Belüftung des Klärschlamms kann auf verschiedene Weise erfolgen. Besonders vorteilhaft erweist sich jedoch die Belüftung des Klärschlamms beim Umwälzen. Auf diese Weise ist eine gleichmässige Belüftung des ganzen Reaktorinhalts möglich. Es ist zweckmässig, dass vor dem Einführen in den Reaktor auch der Frischschlamm belüftet wird. Dieser wird zweckmässigerweise vor dem Einführen mit Klärschlamm aus dem Reaktor gemischt. Dies hat den Vorteil, dass in den Frischschlamm sofort eine grosse Zahl von thermophilen Bekterien eingebracht werden, wodurch die thermophile Reaktion beschleunigt wird. Zur Beschleunigung der thermophilen Reaktion trägt auch bei, wenn die Mischung vor dem Einlass in den Reaktor belüftet wird.

Wie bereits erwähnt wurde, ist die Vorrichtung zur Durchführung des Verfahrens dadurch gekennzeichnet, dass die Vorlage im Innern des Reaktors angeordnet ist. Wenn bei diesem Reaktor eine Umwälzpumpe vorgesehen ist, welche Klärschlamm aus dem oberen Teil des Reaktors und/oder frischen Klärschlamm in den unteren Teil des Reaktors pumpt, ist zum Einlass von Klärschlamm in die Vorlage die Vorlage vorteilhaft durch eine Leitung an den oberen Teil des Reaktors angeschlossen. Dies hat den Vorteil, dass kein relativ frischer Kläschlamm in die Vorlage gelangen kann. Dennoch reicht bei genügend tiefem Anschluss der Leitung am oberen Teil des Reaktors der statische Druck des im Reaktor befindlichen Klärschlammes aus, um Klärschlamm in die Vorlage zu fördern, ohne dass eine Pumpe notwendig wäre.

Zweckmässigerweise sind Reaktor und Vorlage als zylindrische Behälter ausgebildet, wobei der Einlass für den Klärschlamm tangential angeordnet ist, um durch den einströmenden Klärschlamm eine Drehbewegung des Reaktorinhalts um die Vorlage zu veranlassen. Diese Anordnung hat den Vorteil, dass im Reaktor kein Pfropfen entsteht, der an der Drehbewegung nicht teilnimmt. Klärschlamm hat bekanntlich Fliesseigenschaften, die erheblich von den Fliesseigenschaften von Wasser abweichen, so dass bisher immer die Gefahr bestand, dass der Inhalt des Reaktors in der Nähe des Zentrums sich verfestigt und einen praktisch stillstehenden Pfropfen bildet.

Zweckmässigerweise weist die Vorlage mindestens zwei Kammern auf, wobei Ventile vorgesehen sind, um diese Kammern abwechslungsweise zu füllen und zu leeren. Wenn somit eine Kammer leer ist, kann auf die andere Kammer umgeschaltet werden, um diese zu leeren, so dass ein kontinuierlicher Betrieb möglich ist. Es ist dann auch möglich, einen Durchflusswärmetauscher zum Vorwärmen des Frischschlammes mit dem behandelten Schlamm vorzusehen. Wie bereits erwähnt wurde, neigt ein Durchflusswärmetauscher weniger zum Verstopfen durch Klärschlamm.

Wenn eine variable Pumpe für den Frischschlamm und eine variable Pumpe für den behandelten Schlamm vorgesehen ist, kann die Vorrichtung kontinuierlich mit Klärschlamm beschickt werden bzw. behandelten Schlamm abgeben. Die Pumpen können dann so gesteuert werden, dass sie entsprechend der kontinuierlich anfallenden Klärschlammenge arbeitet.

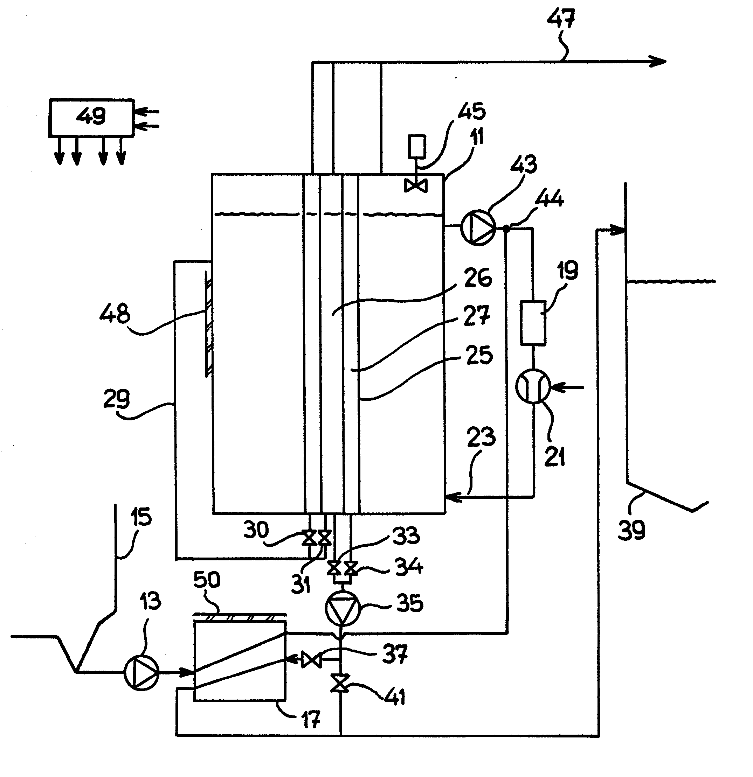

Ein Ausführungsbeispiel der Erfindung wird nun unter Bezugnahme auf die Zeichnung beschrieben.

Beim gezeigten Ausführungsbeispiel wird ein Reaktor 11 zur Aufnahme von Klärschlamm vorgesehen, der mittels einer Pumpe 13 von der Kläranlage 15 über den Wärmetauscher 17 die Stützheizung 19, den Injektor 21 zum Einlass 23 in den Behälter 11 gefördert wird. Eine Vorlage 25, welche zwei Kammern 26 und 27 aufweist, befindet sich im Zentrum des Reaktors 11. Die Vorlage 25 dient der Aufnahme von behandeltem Schlamm aus dem Reaktor 11 und ist zu diesem Zweck mit dem Reaktor 11 über die Leitung 29 und die Ventile 30, 31 verbunden. Das Ventil 30 führt zur Kammer 27 und das Ventil 31 zur Kammer 26. Von der Vorlage 25 kann der behandelte und entgaste Klärschlamm über die Ventile 33, 34 mittels der Pumpe 35 über das Ventil 37 und den Wärme tauscher 17 zur weiteren Behandlung in den Behälter 39 abgepumpt werden. Beim Behälter 39 kann es sich beispielsweise um einen Faulraum handeln. Ein Ventil 41 ist vorgesehen, um einen Bypass zum Wärmetauscher 17 zu ermöglichen, wenn dies gewünscht wird.

Um den Klärschlamm im Reaktor 11 zu belüften, gibt es verschiedene Möglichkeiten. So könnte beispielsweise unten am Behälter Luft eingeführt werden. Beim gezeigten Ausführungsbeispiel ist jedoch zur Belüftung eine Umwälzpumpe 43 vorgesehen, welche eine Umwälzung des Reaktorinhalts bewirkt, wobei dann durch den Injektor 21 dem Klärschlamm Luft zugeführt wird. Um etwaigen im Reaktor entstehenden Schaum zu vernichten, ist ein Schaumschneider 45 vorgesehen. Zur Abführung der Abluft aus dem Reaktor 11 und der Vorlage 25 dient die Abluftleitung 47. Die Steuerung des Verfahrens zum Konditionieren und Hygienisieren erfolgt durch die beispielsweise elektronische Steuereinrichtung 49, welche Pumpen und Ventile schaltet.

Bevor nun die Arbeitsweise der Anlage in Details beschrieben wird, ist noch auf einige konstruktive Details des gezeigten Ausführungsbeispiels hinzuweisen. Der Reaktor 11 und die Vorlage 26 sind als konzentrische zylindrische Behälter ausgebildet, wobei das Volumen einer Kammer 26, 27 ungefähr zwei Prozent des Reaktorvolumens entspricht. Wenn somit der Reaktor 11 zur Aufnahme eines Tagesvolumens dimensioniert ist, kann jede Kammer 26, 27 halbstündlich entleert werden. Eine halbe Stunde entspricht ungefähr der Verweilzeit, die notwendig ist, um allfällige im behandelten Klärschlamm noch vorhandene Enterobakteriaceen oder Wurmeier zu vernichten.

Der Einlass 23 ist am unteren Teil des Reaktors 11 angeordnet. Demgegenüber führt die Leitung 29 vom oberen Teil des Reaktors 11 zur Vorlage 25. Durch diese Separierung wird die Gefahr, dass Spuren von unbehandeltem Klärschlamm zusammen mit dem behandelten Klärschlamm in die Vorlage 25 gelangen, weitgehend vermieden. Der Einlass 23 kann tangential angeordnet sein, damit der einströmende Klärschlamm eine Drehbewegung des Reaktorinhalts um die Vorlage 25 veranlasst. Da die Reaktortemperatur > 60° C ist, ist der Reaktor mit einer Wärmeisolation 48 versehen, um Wärmeverluste zu vermeiden. Eine Wärmeisolation 50 ist auch zweckmässig für den Wärmetauscher 17. Es ist auch zweckmässig, die Leitungen und andere Anlageteile, welche warmen Klärschlamm führen, entsprechend zu isolieren.

Beim gezeigten Ausführungsbeispiel ist es möglich, dass die Pumpe 13 zur gleichen Zeit Frischschlamm fördert wie die Pumpe 43 bereits im Reaktor vorhandenen Klärschlamm umwälzt. Es entsteht daher ein Schlammgemisch, das zudem noch durch den Injektor 21 belüftet wird. Der frische Klärschlamm wird somit gleich zu Beginn mit einer hohen Anzahl von thermophilen Bakterien geimpft und durch die Sauerstoffzufuhr werden zudem sofort ideale Bedingungen für die weitere Vermehrung der thermophilen Bakterien geschaffen. Das Schlammgemisch hat zudem eine günstige Temperatur für die biologischen Vorgänge im Reaktor.

Im Betrieb arbeitet die Anlage wie folgt:

Frischer Klärschlamm aus der Kläranlage 15 wird mit der Pumpe 13 durch den Durchflusswärmetauscher 17 geführt. Da gleichzeitig die Pumpe 35 behandelten Klärschlamm durch den Wärmetauscher 17 im Gegenstrom zum frischen Klärschlamm führt, wird der frische Klärschlamm vorgewärmt. Die Pumpe 43 wälzt den Reaktorinhalt um, so dass an der Stelle 44 eine Vermischung von frischem Klärschlamm mit Klärschlamm aus dem Reaktor erfolgt. Dieses Gemisch hat eine Temperatur, die bereits nahe der im Reaktor 11 herrschenden Schlammtemperatur von > 60° C ist. Nötigenfalls kann mit der Stützheizung 19 noch weiter Wärme dem Schlammgemisch zugeführt werden. Durch den Injektor 21 erfolgt eine Belüftung des Schlammgemisches bevor dieses durch den Einlass 23 in den Reaktor 11 strömt und wegen der tangentialen Anordnung des Einlasses 23 eine Drehbewegung des Reaktorinhalts aufrecht erhält. Die Steuerung 49 steuert die Ventile 33 und 34 abwechslungsweise, so dass abwechslungsweise die Kammer 26 oder 27 an die Pumpe 35 angeschlossen ist. Ist beispielsweise das Ventil 33 offen, so entleert sich die Kammer 26 über eine Zeitdauer von etwa einer halben Stunde. Das Ventil 31 ist dann geschlossen und das Ventil 30 offen, so dass die Kammer 27 über die Leitung 29 in wenigen Minuten gefüllt wird, worauf dann das Ventil 30 wieder geschlossen wird. Dieses wechselweise Oeffnen und Schliessen der Ventile 33, 34 und 30, 31 gestattet einen kontinuierlichen Betrieb der Schlammabfuhr und der Schlammzufuhr.

Es sind verschiedene Modifikationen des Verfahrens und der Vorrichtung möglich, ohne vom Grundgedanken der Erfindung abzuweichen. So kann beispielsweise die Vorlage 25 auch durch einen zylindrischen Behälter gebildet werden, der durch eine senkrechte Scheidewand in zwei Kammern mit halbmondförmigem Querschnitt aufgeteilt ist.

## Patentansprüche

1. Verfahren zum Konditionieren und Hygienisieren von Klärschlamm, bei welchem Verfahren der frische Klärschlamm zuerst durch Temperaturerhöhung in einem Reaktor (11) hygienisiert und/oder hydrolysiert, dann in einer Vorlage (25) weiter hygienisiert und entgast und schliesslich in einer oder mehreren Stufen (39) in Faulschlamm umgewandelt wird, dadurch gekennzeichnet, dass die Temperatur des Klärschlamms in der Vorlage (25) durch Wärme aus dem Reaktor (11) aufrecht erhalten wird.

2. Verfahren nach Anspruch 1, dadurch gekennzeichnet, dass die Vorlage (25) mit Reaktorklärschlamm umspült wird.

3. Verfahren nach Anspruch 1 oder 2, dadurch gekennzeichnet, dass der im Reaktor (11) befindliche Klärschlamm durch eine Pumpe (43) umgewälzt wird und dass der durch die Pumpe (43) geförderte Klärschlamm tangential in den Reaktor (11) eingeführt wird und so der Reaktorinhalt in Drehbewegung um die Vorlage (25) versetzt wird.

4. Verfahren nach einem der Ansprüche 1 bis 3, dadurch gekennzeichnet, dass der behandelte Klärschlamm aus der Vorlage 25 und der Frischschlamm im Gegenstrom durch einen Durchflusswärmetauscher (17) geführt werden.

5. Verfahren nach einem der Ansprüche 1 bis 4, dadurch gekennzeichnet, dass zwecks Erzielung einer kontinuierlichen Operation eine Vorlage mit mindestens zwei Kammern (26, 27) verwendet wird und dass diese Kammern (26, 27) abwechslungsweise gefüllt und geleert werden.

6. Verfahren nach einem der Ansprüche 1 bis 5, dadurch gekennzeichnet, dass der Klärschlamm beim Umwälzen belüftet wird.

7. Verfahren nach Anspruch 6, dadurch gekennzeichnet, dass vor dem Einführen in den Reaktor der Frischschlamm belüftet wird.

8. Verfahren nach einem der Ansprüche 1 bis 7, dadurch gekennzeichnet, dass vor dem Einführen in den Reaktor der Frischschlamm mit Klärschlamm aus dem Reaktor (11) gemischt wird.

9. Verfahren nach einem der Ansprüche 6 bis 8, dadurch gekennzeichnet, dass vor dem Einführen in den Reaktor (11) der Frischschlamm mit Klärschlamm aus dem Reaktor (11) gemischt und die so erhaltene Mischung belüftet wird.

10. Vorrichtung zur Durchführung des Verfahrens nach einem der Ansprüche 1 bis 9, dadurch gekennzeichnet, dass die Vorlage (25) im Innern des Reaktors (11) angeordnet ist.

11. Vorrichtung nach Anspruch 10 mit einer Pumpe (43), welche Klärschlamm aus dem oberen Teil des Reaktors (11) und/oder frischen Klärschlamm in den unteren Teil des Reaktors (11) pumpt, dadurch gekennzeichnet, dass zum Einlass von Klärschlamm in die Vorlage (25) die Vorlage durch eine Leitung (29) an den oberen Teil des Reaktors (11) angeschlossen ist.

12. Vorrichtung nach Anspruch 10 oder 11, dadurch gekennzeichnet, dass Reaktor (11) und Vorlage (25) als zylindrische Behälter ausgebildet sind und dass der Einlass (23) für den Klärschlamm in den Reaktor (11) tangential angeordnet ist, um durch den einströmenden Klärschlamm eine Drehbewegung des Reaktorinhalts um die Vorlage (25) zu veranlassen.

13. Vorrichtung nach einem der Ansprüche 10 bis 12, dadurch gekennzeichnet, dass die Vorlage (25) mindestens zwei Kammern (26, 27) aufweist, und dass Ventile (30, 31, 33, 34) vorgesehen sind, um die Kammern (26, 27) abwechslungsweise zu füllen und zu leeren.

14. Vorrichtung nach einem der Ansprüche 10 bis 13, dadurch gekennzeichnet, dass ein Durchflusswärmetauscher (17) zum Vorwärmen des Frischschlamms mit dem behandelten Schlamm vorgesehen ist.

15. Vorrichtung nach einem der Ansprüche 10 bis 14, dadurch gekennzeichnet, dass eine variable Pumpe (13) für den Frischschlamm und eine variable Pumpe (35) für den behandelten Schlamm vorgesehen sind.